# EUROPEAN PATENT SPECIFICATION

(11) **EP 3 637 347 B1**
(45) Date of publication and mention of the grant of the patent: **14.06.2023**
(21) Application number: 18275159.4
(22) Date of filing: 10.10.2018
(51) Int. Cl.: G06Q 30/00, G06Q 10/06

(54) **METHOD AND SYSTEM FOR PROCESSING ENVIRONMENTAL IMPACT**
VERFAHREN UND SYSTEM ZUR UMWELTAUSWIRKUNGSVERARBEITUNG
PROCÉDÉ ET SYSTÈME DE TRAITEMENT D'IMPACT ENVIRONNEMENTAL

(43) Date of publication of application: 15.04.2020
(73) Proprietor: Platform Independent Systems Limited, London, Greater London SW19 3BP (GB)
(72) Inventor: MOSTYN, Robert Stewart, London, Greater London SW19 3BP (GB); STEVENS, Graham Richard, London, Greater London SW19 3BP (GB)
(74) Representative: Kramer, Dani

(56) References cited:
- GB-A- 2 436 380
- US-A1- 2004 044 476
- US-A1- 2008 319 810
- US-A1- 2018 268 420

## Description

The present invention relates to a method and system for processing an environmental impact associated with a product in a supply chain.

Industrial and personal activity is generating more greenhouse gases that the Earth can absorb. In order for the environmental impact of such actions to be reduced effectively, it is necessary to provide a method of measuring the environmental impact associated with such activities, where the measurement method is pervasive throughout an entire supply chain associated with a product or good.

The environmental impact associated with the life of products or goods is often assessed using life cycle analysis (LCA), in which environmental impacts in relation to a single product are identified from a single point in a supply chain, and an entire history of material inputs/outputs and a projection of use is used to determine an environmental impact.

Such life cycle analyses may be unreliable as a result of relying on data from upstream suppliers and often involve many assumptions. Additionally, the data used in such life cycle analyses may be outdated, which may further reduce the reliability of the analyses, Furthermore, such analyses may be difficult to compare to other such analyses, and may be difficult to apply to other situations/entities within a supply chain.

Patent document US2008/0319810 discloses methods and systems for collecting, storing and distributing information relating to goods and/or services, and in particular, information relating to the environmental impact of goods and/or services at respective points in a lifecycle of the good and/or service.

Aspects and embodiments of the present invention are set out in the appended claims. These and other aspects and embodiments of the invention are also described herein.

The scope of the invention is defined by the appended claims.

By passing an environmental impact certificate for a product between entities in a supply chain, where each entity uses a ledger from which an identity of the product may be determined for use to update the environmental impact certificate (in conjunction with the environmental impact database), the environmental impact associated with a product can be assessed by cumulatively incorporating the environmental impact at each entity in the supply chain (i.e. at each processing step). This may allow for a more granular assessment of environmental impact in respect of a product in a supply chain. Furthermore, a more accurate assessment of environmental impact may be provided. The environmental impact database may be associated with the entity, or in a further alternative may be accessible by all entities in the supply chain. Optionally, a subset of data related to environmental impacts related to the environmental impacts of the operations of the entity on the product is used. Optionally, the environmental impact database is the same database as the environmental impact certificate database. Optionally, the method further comprises making the updated environmental impact certificate available to a downstream entity in the supply chain. Making the updated environmental impact certificate available to the downstream entity may comprise storing the updated environmental impact certificate on the certificate database.

Optionally, the method further comprises detecting an interaction between the downstream entity and the product; wherein making the updated environmental impact certificate available to the downstream entity is in dependence on the detection of the interaction. Optionally, detecting an interaction comprises at least one of: identifying an interaction between the downstream entity and the product from the electronic ledger by means of the data extractor; and receiving a signal indicative of the interaction from the downstream entity.

Logging an identity of the product may comprise at least one of: receiving a transaction record from the upstream entity; creating a transaction record; and scanning a physical identifier on or associated with the product. The logging may comprise recording at least one of: receipt of the product at the entity; delivery / acquisition and/or dispatch of a product; disposal of a product; use and/or sale of a product; and any of the aforementioned activities in relation to a sub-component or an ingredient associated with the manufacture of a product.

The data related to environmental impacts of one or more operations associated with one or more products may comprise at least one of: a Lifecycle Impact Database; a calculation of environmental impact; and the determined environmental impact associated with one or more operations on the product by the entity. Optionally, the method further comprises collecting data related to an environmental impact associated with operations on products; wherein said collecting optionally comprises one or more of: monitoring power consumption by the entity; and monitoring resource consumption by the entity.

Optionally, the method further comprises logging at least one of: the determined environmental impact associated with one or more operations on the product by the entity, and the updated environmental impact certificate, against a user profile for the entity. At least one of: the determined environmental impact associated with one or more operations on the product by the entity, and the updated environmental impact certificate, may be associated with the user profile by means of an interaction between a user account card and a point of sale system capable of performing said association.

A user associated with the user profile may be capable of downloading data associated with their user profile. The method may further comprise deleting personal data associated with the user profile when the user associated with that user profile downloads the data associated with their user profile.

The method may further comprise categorizing the product, optionally based on the identity of the product, thereby to identify the one or more operations on the product by the entity, optionally wherein determining an environmental impact associated with one or more operations on the product by the entity comprises associating the data related to environmental impacts, the identified product and the identified one or more operations.

Optionally, the method further comprises accessing the data related to environmental impacts of one or more operations associated with products from at least one of: the environmental impact database; and local storage.

Optionally, the method further comprises sending or transferring the product to the downstream entity in the supply chain. Optionally, the method further comprises operating on the product. Optionally, the method further comprises, using the user profile, determining a measure of the entity's overall environmental impact associated with a plurality of products.

The one or more operations may comprise one or more of: manufacturing; extracting; storing; transporting; processing; disposal; recycling; and packaging. The identity of the product may comprise at least one of: the type of the product; the quantity of the product; and an operation to which a product is subjected. The electronic ledger may comprise at least one of: a transaction logger; stock ledger; an accounting system; a time sheet; a manufacturing process logger; and a track and trace system.

According to at least one aspect, there is provided a computer program product comprising software code adapted to carry out the method described herein.

According to at least one aspect, there is provided a system for processing an environmental impact associated with a product in a supply chain formed of a plurality of entities, comprising: an environmental impact database for storing data related to environmental impacts of one or more operations associated with one or more products; a data extractor arranged to identify an identity of the product from an electronic ledger logging an identity of a product at an entity in a supply chain, the entity being arranged to receive a product from an upstream entity in the supply chain and the electronic ledger being associated with the entity; a module for accessing an environmental impact certificate associated with the identified product from a certificate database, the certificate database being mutually accessible to entities in the supply chain; a module for determining an environmental impact associated with one or more operations on the product by the entity by associating the data related to environmental impacts and the identified product; and a module for generating an updated environmental impact certificate including the determined environmental impact associated with the one or more operations of the entity on the product. Optionally, the system is a plug-in software component to the electronic ledger. Optionally, the system further comprises at least one of: the electronic ledger; and the certificate database.

Optionally, the system further comprises a module for making the updated environmental impact certificate available to a downstream entity in the supply chain. The module for making the updated environmental impact certificate available to the downstream entity may comprise a module for storing the updated environmental impact certificate on the certificate database.

Optionally, the system further comprises a module for detecting an interaction between the downstream entity and the product; wherein making the updated environmental impact certificate available to the downstream entity is in dependence on the detection of the interaction.

Optionally, the system further comprises a module for collecting data related to an environmental impact associated with operations on products; wherein said collecting optionally comprises one or more of: monitoring power consumption by the entity; and monitoring resource consumption by the entity.

Optionally, the system further comprises a module for logging at least one of: the determined environmental impact associated with one or more operations on the product by the entity, and the updated environmental impact certificate, against a user profile for the entity. At least one of: the determined environmental impact associated with one or more operations on the product by the entity, and the updated environmental impact certificate, may be associated with the user profile by means of an interaction between a user account card and a point of sale system capable of performing said association. Optionally, the system further comprises at least one of: the point of sale system; and the user account card.

A user associated with the user profile may be capable of downloading data associated with their user profile. The system may further comprise a module for deleting personal data associated with the user profile when the user associated with that user profile downloads the data associated with their user profile.

The system may further comprise a module for categorizing the product, optionally based on the identity of the product, thereby to identify the one or more operations on the product by the entity, optionally wherein the module for determining an environmental impact associated with one or more operations on the product by the entity operates by associating the data related to environmental impacts, the identified product and the identified one or more operations.

The invention also provides a computer program or a computer program product for carrying out any of the methods described herein, and/or for embodying any of the apparatus features described herein, and a computer readable medium having stored thereon a program for carrying out any of the methods described herein and/or for embodying any of the apparatus features described herein.

The invention also provides a signal embodying a computer program or a computer program product for carrying out any of the methods described herein, and/or for embodying any of the apparatus features described herein, a method of transmitting such a signal, and a computer product having an operating system which supports a computer program for carrying out the methods described herein and/or for embodying any of the apparatus features described herein.

As used herein, the term "product" preferably connotes an output of a process; more preferably a discrete article which is produced by an industrial process. It will be appreciated that the nature of the product may change throughout a production process or supply chain (e.g. a product may be transformed from one object to another, or formed by a combination of two or more objects), in which case references to a particular product preferably should be understood to refer to all preceding materials or other products which form the particular product. It will be appreciated that in some circumstances the product may be an output of a service (i.e. the product need not be a physical product). In particular, the product may be an intangible item, such as a document, project, or legal advice. As used herein, the term "product" should be understood to be synonymous with the term "good".

As used herein, the term "supply chain" preferably connotes the sequence of processes (preferably performed by a plurality of discrete entities) involved in the production and distribution of a product.

As used herein, the term "entity" preferably connotes any being or thing forming or involved in a distinct and independent stage of a supply chain for a product, for example, an organisation such as a company or public body, a person, or a physical premises. As used herein, the term "entity" should be understood to be synonymous with the terms "party", "node", and "user".

As used herein, the term "upstream" preferably connotes any activities in relation to a product (and associated with a supply chain for that product) occurring before receipt of the product at a particular entity, more preferably any activities related to the material inputs required for the creation of the product.

As used herein, the term "downstream" preferably connotes any activities in relation to a product (and associated with a supply chain for that product) occurring after the product is sent away from a particular entity, more preferably any activities related to the distribution, use by end users, and disposal of the product.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

In this specification the word 'or' can be interpreted in the exclusive or inclusive sense unless stated otherwise.

Furthermore, features implemented in hardware may generally be implemented in software, and vice versa. Any reference to software and hardware features herein should be construed accordingly.

It should also be appreciated that particular combinations of the various features described and defined in any aspects of the invention can be implemented and/or supplied and/or used independently, as defined by the appended claims.

### Brief Description of Drawings

One or more aspects will now be described, by way of example only and with reference to the accompanying drawings having like-reference numerals, in which:
Figure 1 shows a schematic overview of a system for measuring environmental impact associated with goods;
Figure 2 shows an example of a supply chain comprising multiple entities using a system for processing an environmental impact associated with a product;
Figure 3 shows an example of an environmental impact evaluator and associated components of the system;
Figure 4 shows schematic hardware components configured to implement a method of processing an environmental impact associated with a product in a supply chain; and
Figure 5 shows a flow chart of a method of processing an environmental impact associated with a product in a supply chain; and
Figure 6 shows a further example of a supply chain comprising multiple entities using the system for processing an environmental impact associated with a product.

### Specific Description

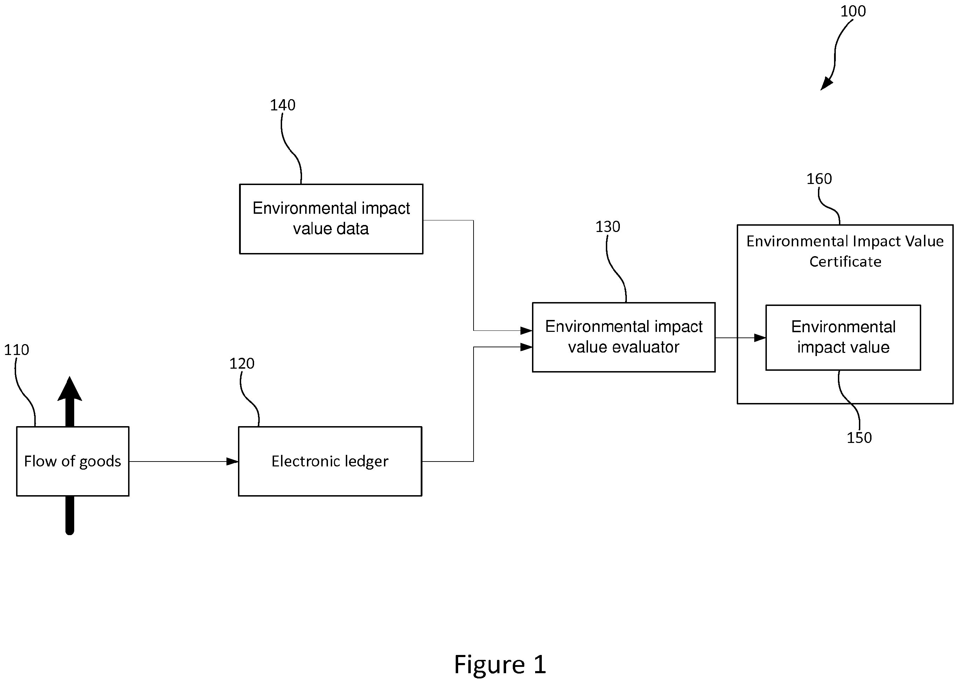

Figure 1 shows a schematic overview of a system for measuring environmental impact associated with goods 100 (also referred to as "products").

In particular, the system 100 is adapted to measure the environmental impact associated with a flow of goods 110 at a particular entity (e.g. a company, a warehouse, a user, etc). The flow of goods includes both incoming and outgoing goods, where the entity receives and holds incoming goods, performs one or more operations on the goods, and then passes them onwards (to a subsequent entity). The interaction between the entity and the flow of goods inevitably causes some form of environmental impact (whether that be as a result of the acquisition of raw goods, the expulsion / disposal of by-products as part of a manufacture process, the transportation of goods, *etc.).* The flow of goods 110 (i.e. incoming and outgoing goods) is recorded in an electronic ledger 120 associated with the entity. In particular, the electronic ledger is a system, or series of systems, that records the flow of goods - specifically, the identity of the goods, which may include various data such as, for example, types of goods, types of flow and volumes of goods).

In one example, the electronic ledger 120 forms part of an existing system (or systems) that acts as a proxy for identifying the flow of goods. In particular, the electronic ledger is, for example, a transaction logger, an accounting system, a time sheet, a manufacturing process logger, and/or a track and trace (delivery) system. In this example, the electronic ledger resides as part of a system belonging to, and/or operated by, the entity involved in the flow of goods.

For example, an entity involved in the flow of a manufactured good is a manufacturer, and the electronic ledger comprises the manufacturing process logger of the manufacturer. In a further example, another party involved in the flow of a manufactured good is a distributor, and the electronic ledger for that second party comprises the track and trace (delivery) system of the distributor.

An environmental impact evaluator 130 is in communication with the electronic ledger 120, as will be described in more detail later. The environmental impact evaluator comprises a data extractor for extracting the data stored in the electronic ledger.

The environmental impact evaluator 130 is configured to receive electronic environmental impact data 140 from an external database, which associates environmental impact with goods and/or an operation on a good. In one example, the environmental impact data 140 is a lifecycle impact database, analysis conducted manually by way of a lifecycle impact analyst. In another example, the environmental impact data 140 is a previous calculation from the system or a different system (i.e. an environmental impact value 150), or a combination of any of the aforementioned.

For example, where a Lifecycle Impact database is used, the Lifecycle Impact database stores data regarding the environmental impact associated with the extraction (*i.e.* the operation) of lead ore (*i.e.* the good). The environmental impact quantifies - directly or indirectly - the resources (*e.g.* water, electricity, fossil fuels, *etc.)* typically used, as well as the waste and emissions / pollutants (*e.g.* Carbon Dioxide, Methane, Ozone, *etc.)* typically produced for a type/class of product or a specified quantity of a product (e.g. the water consumed per kilogram of production of a particular product).

In this way, the environmental impact evaluator 130 is therefore able to determine an environmental impact value 150 for a good by extracting the relevant information from the electronic ledger (e.g. details regarding the good, acts undertaken on the goods, and their quantity) and the environmental impact value data 140. In other words, in some examples, the environmental impact evaluator 130 takes the generalised environmental impact data 140 and applies it to the specific identity of the actual product at the entity to determine the environmental impact value 150 for that identified product.

The system 100 outputs the environmental impact value 150 as part of an environmental impact value certificate 160, which comprises details regarding the source of the environmental impact value 150. The environmental impact value certificate 160 comprises data, including for example:
- the entity and/or electronic ledger from which the environmental impact value was calculated
- the entity to whom an environmental impact value is to be communicated
- the details regarding the goods (identifier, type, constituent parts, quantities, *etc.)* and/or the operations undertaken in relation to the goods that were utilized in the calculation of the environmental impact value
- a version number for the environmental impact value (e.g. where the environmental impact value changes over time, for example between batches, different "versions" of the same value for a different activity may be produced).

As will be detailed later on, the environmental impact value certificate 160 is retrievable by specific other entities (customers) using respective systems 100, by means of the certificate being transmitted to those entities and/or by means of the certificate being uploaded to a mutually accessible database (i.e. a database that is accessible only to prescribed entities).

As described in more detail below, the environmental impact certificate 160 is - by association with the electronic ledger - linked to a party, good and/or status of a good. In this way, the environmental impact certificate is transferable (and traceable) along with a good as it moves (or is modified) within a supply chain. As a consequence, the environmental impact certificate cumulatively factors the environmental impact values associated with each step in the flow of goods.

Generally, a Lifecycle Impact database is used as the environmental impact data 140 only when more refined calculated environmental impact data is not available (e.g. where the system 100 is being set up, or for new operations to which the system 100 has not been previously applied). Calculated environmental impact data may be more accurate than data from a Lifecycle Impact database as it relates more directly to the specific operations, products, and entities involved in the action having an environmental impact.

The system 100, as shown in and described with reference to Figure 1, forms part of a wider system 200 in respect of multiple entities for recording and communicating the measured environmental impact (i.e. for processing an environmental impact associated with a product in a supply chain); this wider system is described below in more detail.

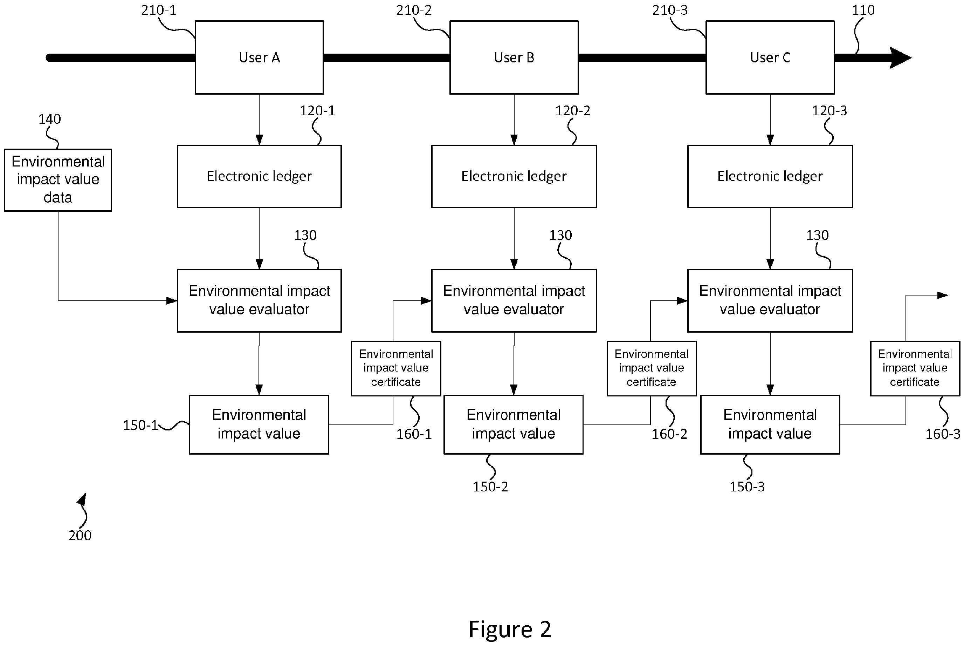

Figure 2 shows an example of a supply chain comprising multiple entities using a system 200 for processing an environmental impact associated with a product.

In more detail, Figure 2 shows a plurality of entities 210 between whom goods flow as part of a supply chain, which may be considered to be an extension (involving multiple entities) of the previously described flow of goods 110.

By way of example, an initial user 210-1 ("user A") acts to create a new good and/or acts on an existing good; this activity is logged by the user A's electronic ledger 120-1. As outlined in Figure 1, an environmental impact value 150-1 is calculated by the environmental impact value evaluator 130 based on environmental impact value data 140 and the identity of the goods (obtained from the electronic ledger 120-1). An environmental impact certificate 160-1 (comprising the environmental impact value 150-1) is generated for upload to a mutually accessible database accessible by the next (downstream) entity (or "node") in the supply chain.

The electronic ledgers 120-1, 120-2 comprise, for example, accounting ledgers. The transaction of goods - and the details associated with that transaction - from the initial user 210-1 to the subsequent user 210-2 is shown by way of an invoice from the initial user 210-1 to the subsequent user 210-2, as is issued in the normal course of trade. The electronic ledgers are typically systems that are operated by a given user, such that the electronic ledger 120-1 of User A 210-1 is independent of the electronic ledger 120-2 of User B 210-2.

When goods are passed from the initial user 210-1 on to a subsequent user 210-2 ("user B"); the outgoing transaction of goods (including their specific identity) is logged by the electronic ledger 120-1 of the initial user 210-1 and/or the incoming transaction of goods is logged by the electronic ledger 120-2 of the subsequent user 210-2. By being associated with, and optionally logging and identifying, preceding and/or subsequent nodes within a supply chain using the electronic ledgers, the environmental impact certificate 160-1 is therefore retrievable by the next entity - User B 210-2.

For example, outgoing and incoming transactions are logged by means of invoices, purchase orders, receipts and the like, and appropriate systems for logging such records. Such records comprise information including: a supplier code (e.g. that a product was received by User B from User A); a purchase order reference; a financial invoice number; a product identifier, including a product code and a quantity of a product. At least some of this information is incorporated into the environmental impact certificate.

The environmental impact certificate 160-1 is uploaded to a mutually accessible database being accessible to the downstream entity (User B 210-2). In this way, User B 210-2 receives the environmental impact certificate 160-1, and therefore inherits ownership of the environmental impact value associated with the acts undertaken by User A 210-1. As will be appreciated, direct transmission of the certificate 160-1 to the downstream entity is also possible, but the use of an intervening server is generally preferred for data security purposes.

The process repeats in a next step, such that User B 210-2 undertakes their own operations in relation to the goods received from User A 210-1, and these acts logged by the electronic ledger associated with User B 120-2. In combination with the environmental impact value data 140 (input not shown in Figure 2 for clarity) and the information from the electronic ledger 120-2 associated with User B, the environmental impact value evaluator 130 determines a new environmental impact value 150-2 associated with User B.

In an alternative, the environmental impact value evaluator 130 does not receive further input from the environmental impact value data 140, and instead uses only the environmental impact certificate 160-1 and the electronic ledger 120-2 to determine the new environmental impact value 150-2 associated with User B. This alternative implementation is generally possible where all relevant environmental impact value data 140 is stored locally to the environmental impact evaluator 130, which may be the case where the entity performs the same operations on the product repeatedly. For example, in the manufacture of plastic bottles, a manufacturer may repeatedly produce the same product using the same materials based on a predictable energy input. In such a situation, the environmental impact value data 140 is unlikely to change between individual operations. Accordingly, no separate reference to any other environmental impact value data 140 is required. The locally held environmental impact value data 140 may be updated periodically in response to e.g. the environmental impact associated with the power grid changing.

In either case, an updated environmental impact value certificate 160-2 is then generated for upload to a (mutually accessible) certificate database and access by a subsequent user - User C 210-3 - and so on.

As will be appreciated, a supply chain for a product as a whole generally involves a large number of operations on a product, where each entity is generally specialised to perform a small number of operations. Such operations may include manufacturing; extracting; storing; transporting; processing; disposal; recycling; and packaging. A number of examples will now be provided to demonstrate operations on a product throughout a supply chain.

With reference to Figure 2, in a specific example:
- User A 210-1 is an extractor and processor of natural resources, such as water for human consumption, and the initial user 210-1 extracts water from a natural source (*e.g.* a body of water) and processes the water to make it potable, which requires energy and may also require the use of chemicals, with which there is associated an environmental impact value.
   ∘ The extraction and manufacturing process by User A is logged by the electronic ledger 120-1, which comprises an industrial electronic system for controlling, monitoring and/or logging the extraction and manufacturing process.
   ∘ The process logs use of a certain amount of energy and use of certain amount of chemicals associated with a batch process.
- Using, for example, an lifecycle impact database to which the Environmental impact value evaluator 130 has access, and the data logged in the electronic ledger 120-1, an environmental impact value is calculated for the extraction and processing of a given batch of water by User A
- The (or a portion of) the batch of water extracted and processed by User A is purchased by User B, as recorded on the electronic ledger 120-1 of User A and/or User B (where the electronic ledgers here are in the form of an accounting system and/or order processing system)
   o The environmental impact value 150-1 associated with the batch of water purchased by User B is also transferred to User B via an updated environmental impact certificate 160.
- User B is a manufacturer of bottled water. The process therefore requires the supply and use of water, bottles, lids, sleeves, and energy. The water bottles, lids, sleeves are provided by third parties (not shown in Figure 2), in a separate portion of the supply chain.
   ∘ Again, as part of the manufacturing process by User B, the resources (i.e. water, bottles, lids, sleeves, and energy) used are logged by the electronic ledger 120-2, which comprises an industrial electronic system for controlling, monitoring and/or logging the manufacturing process.
   ∘ the environmental impact value evaluator 130 determines an environmental impact value 150-2 using:
      ▪ pre-determined data regarding environmental impact for each constituent of the bottled water used by User B (as determined by a lifecycle expert)
      ▪ The data logged by the electronic ledger 120-2 regarding the details of the manufactured batch;
- User B therefore outputs an environmental impact value 150-2 associated with the manufacture of the batch of bottled water. This is then incorporated into a further updated environmental impact certificate, such that the environmental impact value 150-1 inherited from User A in the supply of the water as used by User B is included in the further updated environmental impact certificate. The batch of bottled water, together with the associated environmental impact value, may then be transferred to a further User C, as will be described later on.

### Environmental impact evaluator

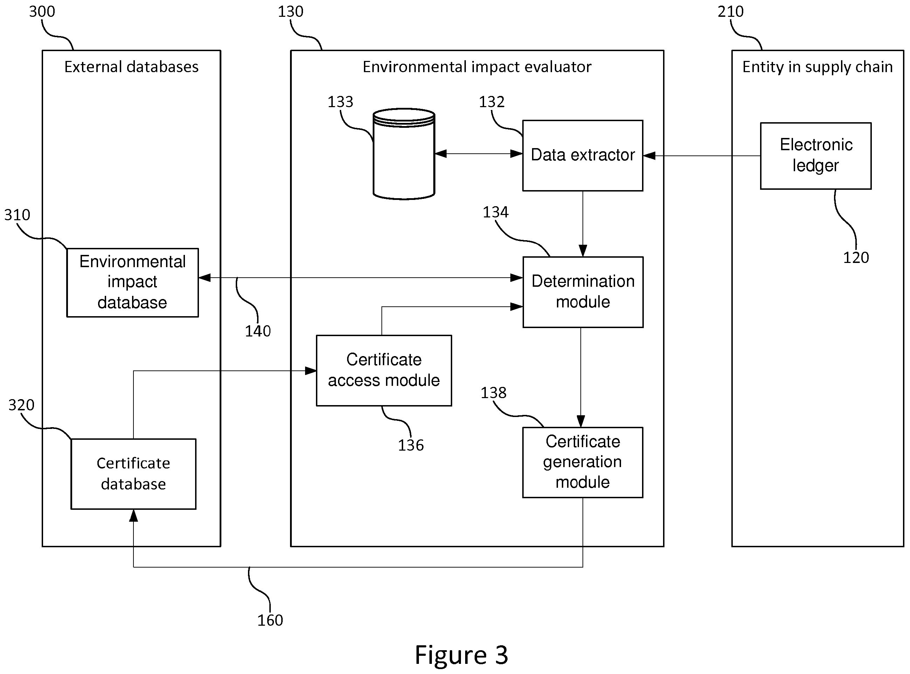

Figure 3 shows components of the environmental impact evaluator 130 (and associated componentry) in detail. The environmental impact evaluator 130 comprises a data extractor 132 which is provided in communication with the electronic ledger 120 of a particular entity 210 in the supply chain. The data extractor 132 comprises a cache 133 which is used for storing extracted data. The data extractor 132 is configured to read new log entries (corresponding to newly received products) in the electronic ledger 120, copy the log entries into the temporary cache 133, and parse the log entries, for example by identifying a schema associated with the electronic ledger and parsing the log entries accordingly by type of data item (e.g. name, type, quantity, etc.). The parsed log entries are then saved in the cache 133, or optionally a further cache.

The environmental impact evaluator 130 comprises a plurality of processing modules, which receive input from one or more databases 300 which are external to the environmental impact evaluator 130. Specifically, the environmental impact evaluator 130 further comprises a determination module 134 which is configured to communicate with an external environmental impact database 310 (storing the previously described environmental impact value data 140), a certificate access module 136 and the data extractor 132.

The environmental impact evaluator 130 further comprises the certificate access module 136, which is configured to receive an environmental impact certificate 160 from a further external (mutually accessible) database 320 holding environmental impact certificates 160 in respect of other entities in the supply chain for a product, or in respect of a plurality of supply chains.

The environmental impact evaluator 130 further comprises a certificate generation module 138, which communicates with the determination module 134. As will be described in more detail later on, the certificate generation module 138 is configured to generate an updated environmental impact certificate 160 in respect of the operations of the entity 210 on the product, and transmit the updated certificate 160 onwards (to the certificate database 320) such that it can be accessed by downstream entities.

A different environmental impact evaluator 130 is provided for each entity in the supply chain, being in communication with each entity's electronic ledger 120 (as was previously described with reference to Figure 2). Each of the environmental impact evaluators 130 may communicate with the same external databases 300. The environmental impact database 310 may be sourced from life cycle inventory data, and may be different at each entity in the supply chain. The environmental impact database 310 is generally cached locally at each entity. The certificate database 320 is massively distributed across a plurality of servers.

The environmental impact evaluator 130 is implemented as a computer program product which is hosted by each entity, generally in the same way that the electronic ledger 120 of the entity is hosted, via a computing device and/or a proprietary server. In some examples, the environmental impact evaluator 130 is implemented as an "add-on", "plug-in", or "extension" to software associated with the electronic ledger, or to the electronic ledger itself. This may improve the interoperability of the environmental impact evaluator 130 and the electronic ledger 120. Alternatively, the environmental impact evaluator 130 may be a standalone software application or computer program product.

In more detail, the environmental impact evaluator 130 comprises an application program interface (API) which is configured to extract data via an API of the electronic ledger using the previously described data extractor 132 (which may form the API). In an alternative, rather than actively extracting data, the system allows third parties (e.g. the electronic ledger) to trigger particular events, in particular the transaction of specific products, which may then be cached in cache 133.

The environmental impact evaluator 130 is able to reference the external databases 300 by means of a communication interface (described later) connecting to a network, such as the internet. In some examples, local (cached) copies of the external databases 300 are stored by the environmental impact evaluator 130, where these cached copies may be updated periodically.

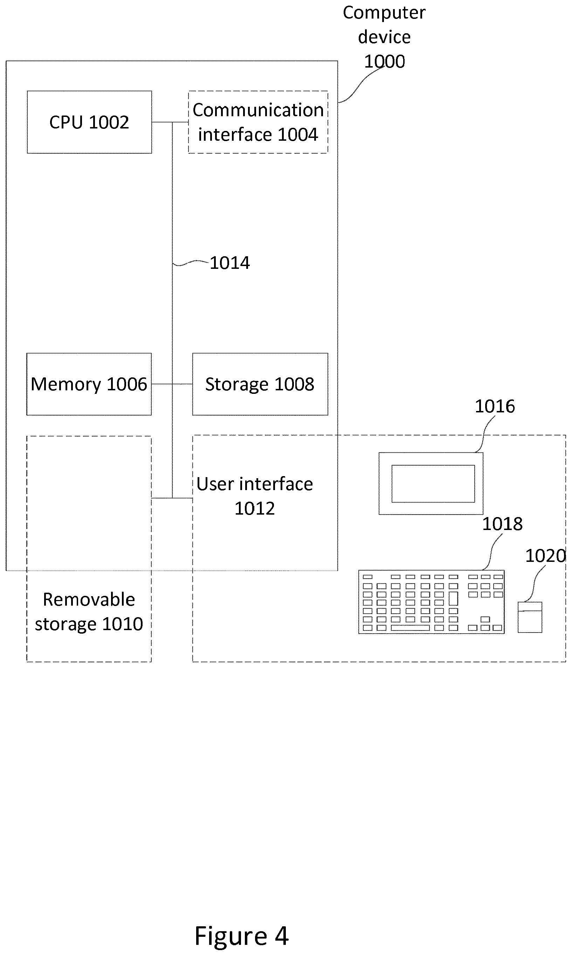

Figure 4 shows an example of a computer device suitable for implementing the environmental impact evaluator 130. The computer device 1000 comprises a processor in the form of a CPU 1002, a memory 1006, storage 1008, removable storage 1010 and a user interface 1012 coupled to one another by a bus 1014. The user interface 1012 comprises a display 1016 and an input/output device, which in this embodiment is a keyboard 1018 and a mouse 1020. In other embodiments, the input/output device comprises a touchscreen. Optionally, the computer device further comprises a communication interface 1004.

The CPU 1002 executes instructions, including instructions stored in the memory 1006, the storage 1008 and/or removable storage 1010.

The memory 1006 stores instructions and other information for use by the CPU 1002. The memory 1006 is the main memory of the computer device 1000. It usually comprises both Random Access Memory (RAM) and Read Only Memory (ROM).

The storage 1008 provides mass storage for the computer device 1000. In different implementations, the storage 1008 is an integral storage device in the form of a hard disk device, a flash memory or some other similar solid state memory device, or an array of such devices.

The removable storage 1010 provides auxiliary storage for the computer device 1000. In different implementations, the removable storage 1010 is a storage medium for a removable storage device, such as an optical disk, for example a Digital Versatile Disk (DVD), a portable flash drive or some other similar portable solid state memory device, or an array of such devices. In other embodiments, the removable storage 1010 is remote from the computer device 1000, and comprises a network storage device or a cloud-based storage device. The communication interface 1004 is typically an Ethernet network adaptor coupling the bus 1014 to an Ethernet socket. The Ethernet socket is coupled to a network.

As mentioned, the environmental impact evaluator 130 is implemented as a computer program product, which is stored, at different stages, in any one of the memory 1006, storage device 1008, and removable storage 1010. The storage of the computer program product is non-transitory, except when instructions included in the computer program product are being executed by the CPU 1002, in which case the instructions are sometimes stored temporarily in the CPU 1002 or memory 1006. It should also be noted that the removable storage 1008 is removable from the computer device 1000, such that the computer program product may be held separately from the computer device 1000 from time to time.

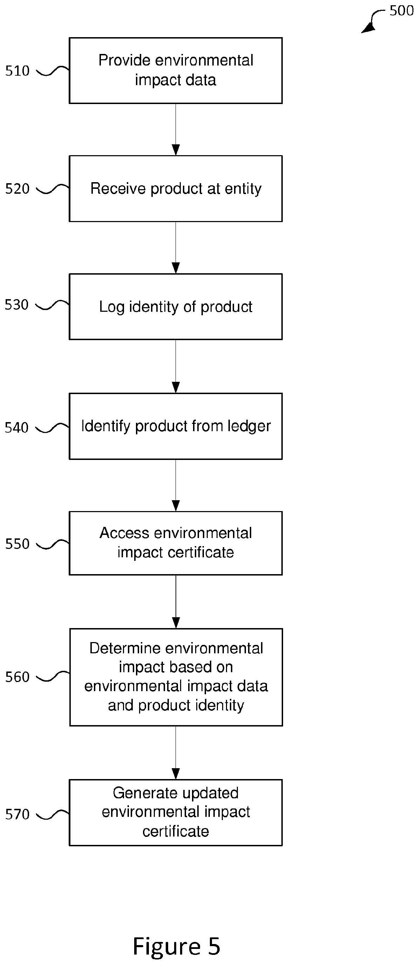

Figure 5 shows, in further detail, the steps of a method 500 of processing an environmental impact associated with a product in a supply chain, as carried out at a single entity within the supply chain. The method 500 uses the software modules of the environmental impact evaluator 130 described with reference to Figures 4 and 5. In a first step 510, environmental impact value data 140 (i.e. data related to environmental impacts of one or more operations associated with products) is provided at the environmental impact database 310.

In a second step 520, at an entity (for example, User B 210-2) in a supply chain, a particular product is received from an upstream entity (for example, User A 210-1).

In a third step 530, an identity of the product is logged by means of the electronic ledger 120-2 associated with the entity. As previously mentioned, the identity of the product may comprise a variety of parameters (depending on the form of the electronic ledger), including the name of the product; the type of the product; the quantity of the product; and an operation to which a product is to be subjected by the entity. The way in which the product is logged by the electronic ledger again depends on the form of the electronic ledger (and of the particular interaction between the entity and the upstream entity). Generally, the logging comprises either receiving a transaction record from the upstream entity and/or creating a new transaction record, and then then logging the same (including the identity and all other relevant details of the product). The transaction record is generated electronically based on a detected transaction and is logged automatically by the electronic ledger, as is known. In some cases, logging the identity of the product comprises scanning a physical identifier (e.g. a barcode or RFID tag) on or associated with the product, which is either used as an input to the electronic ledger or used to verify a transaction record. Logging may also comprise recording actual events in relation to the product itself, including receipt of the product at the entity; delivery / acquisition and/or dispatch of a product; disposal of a product; use and/or sale of a product, or any such activity relating to a sub-component/ingredient of the product (in particular where the entity is a manufacturer)

In a fourth step 540, the logged identity of the product is identified from the electronic ledger by means of a data extractor of the environmental impact value evaluator 130. As previously described, the data extractor acts to parse the log entries and save them in a further cache. Such parsing is generally based on the data extractor being configured to parse log entries according to a predetermined schema (matching that of the electronic ledger), but it will be appreciated that a variety of other techniques could be used to extract data from the log - in particular, natural language processing techniques may be used to extract information from log entries. The extracted data may relate to a variety of factors useful in determining environmental impact, such as the energy and/or materials used and/or extracted (i.e. untreated water, chemical for processing water, etc.) to create the manufactured goods used (i.e. potable water), and the amounts of materials used and/or goods created. The logged identity may relate to a particular event associated with the product - e.g. "commence manufacture of a batch of 2,000 plastic bottles".

In a fifth step 550, the environmental impact certificate 160 for the product from the preceding entity in the supply chain is identified and accessed, via the certificate access module 136 accessing the mutually accessible certificate database 320.

In a sixth step 560, an environmental impact associated with one or more operations on the product by the entity is determined by the determination module 134. The determination module 134 determines the environmental impact of the operations of the entity on the product by associating the parsed log entries (relating to the identity and quantity of the product) and the environmental impact data 140. This may involve a simple multiplication, or may be more complex. In some cases, the identity of the entity is used in the determination, for example to identify the operations of relevance that need to be considered. In some examples, the environmental impact certificate 160 (which may also include details of the identity and quantity of the product) may be referenced in addition or instead of the parsed log entries.

As previously described, in some examples, the determination involves referencing a previously determined (and locally saved) environmental impact for operations on the same type of product, rather than (or in addition to) referencing an environmental impact database. For example, if the environmental impact of packaging a particular quantity of product (e.g. six cases of wine) is known, then subsequent packaging operations for the same of product may be assumed to incur the same environmental impact for the same quantity (so if twelve cases of wine are packaged in a subsequent operation, the previously calculated environmental impact may simply be doubled). Where the determination involves referencing locally stored environmental impact data, no reference to an external database may be necessary.

In a seventh step 570, the certificate generation module 138 generates an updated environmental impact certificate based on the accessed environmental impact certificate and the determined environmental impact for the entity on the product. In some cases this will involve simply adding the environmental impact into the existing certificate, but in other cases an entirely new certificate is generated (e.g. where a "new" operation is used, e.g. on a new batch of products).

As described with reference to Figure 2, the updated environmental impact certificate is then made available to the next (downstream) entity in the supply chain. Various methodologies are contemplated by which a downstream entity can receive an environmental impact certificate 160 from an upstream user. Where a certificate database 320 is used, the updated certificate is sent to, and is saved in, this database (which is accessible by the downstream entity). The environmental impact certificate 160 generally includes details of the downstream user (obtained from the electronic ledger 120), but in an alternative may simply reference the upstream user - in which case the environmental impact value estimator in respect of the downstream user identifies the environmental impact certificate 160 in the certificate database 320 by comparing their electronic ledger 102 (relating to the incoming product at the downstream user) and the environmental impact certificate 160 (which includes details of the same product at the upstream user, obtained from the upstream user's electronic ledger 120-1).

The downstream entity is passed unique identifiers (such as a user name and password) by the upstream user, allowing unique access to the environmental impact certificate 160.

The certificate 160 is generally made available to the downstream entity only when a transaction between an upstream and downstream entity occurs, and/or when the product physically leaves the upstream entity. A transaction can be detected by the data extractor 132 of the upstream entity monitoring the electronic ledger of the upstream entity - once detected, the environmental impact evaluator 130 of the upstream entity may make the environmental impact certificate corresponding to the transaction available to the downstream entity (via the certificate database 320).

### User environmental impact account

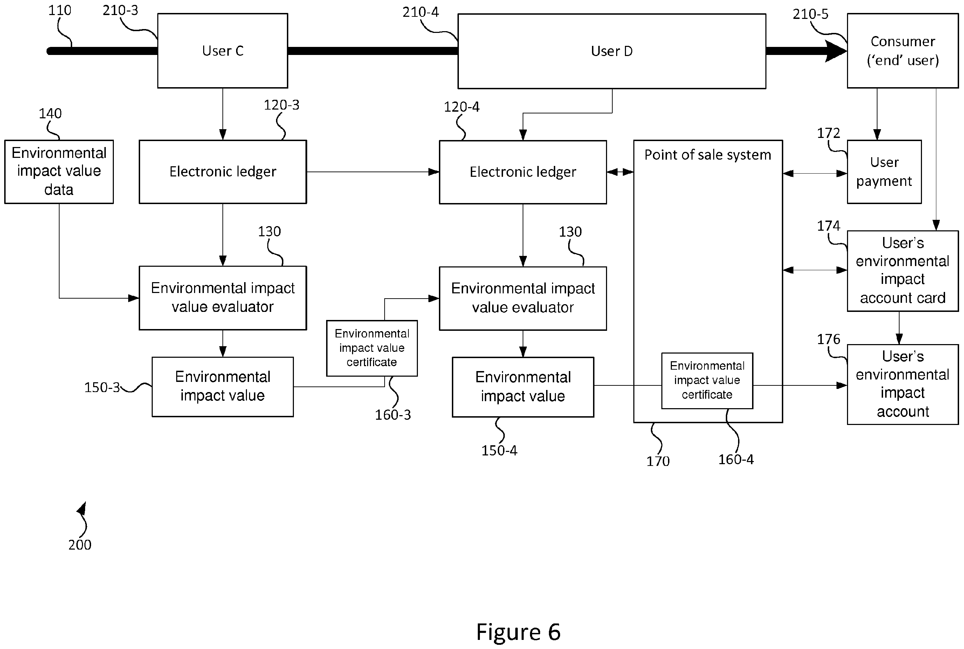

Figure 6 shows a further extended example of the supply chain shown in Figure 2, in which the supply chain is extended to an 'end' user 210-5, such as a consumer. The end user is the final user of a finished product. A final environmental impact certificate 160-4, incorporating all of the environmental impact by the various entities across the supply chain on the product is generated by the final entity, User D, in the supply chain (typically a retailer).

In order to purchase an item, a consumer interacts with the retailer User D via an electronic point of sale system (also known as a point of purchase system). Such a system usually comprises one or more of a payment terminal, a cash register, weighing scales, and a barcode scanner. Point of sale systems may be operated by a cashier, or may be "self-service" checkouts. The point of sale system is generally provided in communication with the electronic ledger 120-4 of User D, such that the point of sale system can access at least some information related to the inventory of User D (and in particular can decrement that inventory when an item is sold). It will be appreciated that a point of sale system (albeit not necessarily a consumer-facing system) may also be used in the previously described systems - these systems are not shown for the purposes of simplicity.

As is known, to purchase a product, a consumer pays for the product via the point of sale system 170 using a typical payment mechanism 172 (such as cash, credit card, or debit card). If the payment is accepted, the consumer takes legal possession of the purchased product. The present system 200 provides a mechanism by which a parallel transaction of environmental impact associated with the purchased product may take place.

The electronic point of sale system 170 is different to conventional electronic point of sale systems in that it provides means for receiving and accessing a user environmental impact account card 174 (which is analogous to a typical payment card, which stores information via a magnetic strip and/or an embedded integrated circuit). This card is linked to an account 176 of the cumulative environmental impact associated with products that the user purchases. The point of sale system is configured to access (or alternatively even to generate) the final environmental impact value certificate 160-4 when the corresponding product is transacted via the point of sale system (or, alternatively, when the corresponding product is decremented from the electronic ledger 120-4). When the consumer interfaces the point of sale system with the user environmental impact account card, the final environmental impact value certificate is associated with the account card. This system allows the final environmental impact value certificate to be associated with the consumer conveniently.

The user environmental impact account card 174 is associated with an environmental impact account 176 that is specific to that consumer. Accordingly, the final environmental impact certificate 160-4 is incorporated (via the account card) into an environmental account 176 associated with the user. The environmental account 176 acts as a record for a plurality of final environmental impact certificates relating to a plurality of products, and enables an overall measure of the user's environmental impact (at least in terms of the products that the user purchases/uses) to be determined. The environmental account 176, and data associated with that account, is stored (in massively distributed fashion) by a plurality of servers.

The user environmental impact account card 174 may be implemented in various different ways. In a particular implementation, the account balance for a user is stored on a centralised database (related to multiple consumers), where a unique identifier associated with a particular account card relates to a particular user profile. To update a user account when a user account card 174 is interfaced with the point of sale system 170, the point of sale system 170 interfaces via an internet connection to the database of user accounts (not shown), and associates the final environmental impact certificate 160-4 with a particular user account 176 associated with the user identified by the account card. Separate user accounts are encrypted and password-protected to prevent unauthorised access of user accounts.

The user account card 174 itself may interact with the point of sale system 170 by "swiping" the magnetic strip through a magnetic reading head provided as part of the point of sale system, or (where the user account card is a "smart card" or "contactless card" including integrated circuits) communicating via RF induction or NFC with a reader provided as part of the point of sale system. Alternatively, the user may identify themselves at the point of sale system 170 by presenting a separate identifier, such as a barcode on a card or smartphone screen (via a software application). The point of sale system 170 may then associate the final environmental impact certificate 160-4 into the environmental account 176 associated with the identifier.

The consumer may download data associated with their account 176 locally to a computing device. The personal data associated with the download may then be deleted from the server which stores account data, which may improve data privacy (whereas anonymised or non-personal data may be retained and used in analytics). In an alternative, a user may access and view their account 176 (or at least a "snapshot" of activity on their account, such as a daily summary) via a software application or web page which interfaces with their user account on the database of user accounts. The user logs in by entering a password associated with their account.

The user's ability to access the environmental account data allows a user to analyse their performance and assess their environmental impact in terms of their purchases. Since the ecological account is updated with every individual purchase, the user is able to access and assess the ecological impact associated with their individual purchases, and so may assess their purchasing habits and use such an assessment to inform their future purchasing decisions.

### Events and goods categorisation

The environmental impact evaluator 130 is configured to categorise goods, in particular the way in which a good is used. This may provide improved accuracy in determining material flows throughout a supply chain, and allows for an improvement in determining where ecological impact arises. Where a locally available environmental impact for a particular operation/good is used, a category is generally already associated with that good - so no further categorisation is necessary. However, for environmental impacts (from the environmental impact database 310) or goods that are newly assessed by the environmental impact evaluator 130, an active categorisation is generally performed.

Generally, such categorisation is performed by one or more of: the certificate access module (operating on the environmental impact certificate 160); and the data extractor 132 when it parses the electronic ledger entries. However, any module of the data extractor may perform such categorisation. In any case, rules are applied in order to categorise the products (as represented by the certificate / ledger entries). The rules for such categorisation are based, at least, on the type of good and/or the supplier of the good (using the supplier's code). For example, a product may be categorised as one or more of:
- a manufactured good (e.g. citric acid, bottled water, a panes of glass, etc.), in which case the record of the manufactured good is moved into an "inventory" in the cache (such that the amount and/or quantity of the manufactured good is known).
- an overhead (e.g. citric acid or bleach for cleaning of premises, gas for heating of premises, telecommunication charges, servicing for maintaining of, for example, vehicles or machinery etc.). The supplier code is used to determine in-house information regarding the use of the good, thereby to enable suitable categorisation, such as the department who ordered it (as identified by a department code on, for example, a purchase order). In this way, a good may be categorised as a manufactured good or an overhead depending solely on the department (within an organisation that as a whole constitutes an entity) that has ordered / received the good.
   ∘ An overhead is generally shared with a group of products rather than a single product, and so the associated environmental impact may be distributed across a plurality of products. For example, where a retailer has goods for sale, only some of which are refrigerated, the environmental impact associated with refrigeration (e.g. the electricity inputs) are allocated to goods that require refrigeration and not others, e.g. tinned soup, newspapers.
   ∘ Overheads may be periodically reviewed and updated, for example based on historic data and forecasts (for example, relating to electricity use).
- a capital item (e.g. a vehicle for shipment of goods or machinery for the manufacture of goods), in which case the ecological impact value of the good is amortised (i.e. distributed over a time period). Accordingly, as with overheads, the associated environmental impact of capital items may be distributed across a plurality of products.

The categories are incorporated into the determination of ecological impact at each entity, and are used to determine an overall ecological impact for a manufactured product (with "products" that are in fact determined to be capital items and/or overheads being distributed between manufactured products). By accounting for capital items and overheads in this way, the accuracy of the assessment of ecological impact is improved.

The environmental impact certificate 160 includes details of the entity which last handled the certificate (i.e. which generated the updated certificate), in the form of a supplier code and/or purchase order reference. By reference to the supplier that is immediately upstream, contextual classifications may be made based on the identity of the supplier.

The rules used for classification of goods are generally configured in a bespoke manner at each entity in a supply chain. If a particular type of good or operation does not correspond to any rule, it is classified into a "manual intervention required" category. This category may be presented to a human operator, who may manually classify such goods/operations. The rules may adapt in accordance with the manual intervention, e.g. to add a new rule such that similar goods/operations are classified without manual intervention.

A number of examples of determination of ecological impact using classified inputs will now be determined for different example entities, as follows:
1. A simple manufacturer
   a. A manufacturer purchases a number of products, which arrive together with the relevant environmental impact certificates.
   b. Utilising the environmental impact certificates, the products are classified into inventory (i.e. manufactured products), overheads, and capital
   c. The manufacturer operates on the products, i.e. it manufactures a further product based on its inputs
   d. The ecological impact of the operations are determined based on the classifications
   e. An updated environmental impact certificate is generated (as previously described), which is sent on to a downstream entity when the manufactured product is transacted.
2. A retailer
   a. A retailer purchases a number of products, which arrive together with the relevant environmental impact certificates.
   b. Based on the environmental impact certificates, the products are classified into inventory (i.e. manufactured products), overheads, and capital
   c. The inventory is for immediate sale, so the only relevant operations on these products are the overheads of the retail operation - which are distributed across the inventory products as they are transacted
   d. The ecological impact of the operations are determined accordingly
   e. An updated environmental impact certificate is generated (as previously described), which is sent on to a downstream entity (in this case, an individual consumer) when an inventory product is transacted.
3. A logistics company
   a. An order arrives to pick-up goods at a first location, and deliver them to a second location
   b. This operation is handled as a single overhead related to the energy associated with transport, where the determination includes the mass of the goods and the distance travelled
   c. As mentioned, overheads are periodically reviewed so as to allow environmental impact to be redistributed across products, if necessary
   d. If a warehouse is used, overheads for storage are also tracked (based on the time for which products are stored) - however, for a depot, products may be stored for too short a time to necessitate tracking overheads for storage
   e. The ecological impact of the operations are determined accordingly
   f. An updated environmental impact certificate is generated (as previously described), which is sent on to a downstream entity.
4. A service company
   a. A service company does not manufacture products, and generally purchases little capital
   b. Accordingly, the only appreciable environmental impact may accrue from products classified as overheads (e.g. electricity for lighting, computers, office equipment, consumables, etc.)
   c. Overheads may be distributed by unit of product sold (e.g. based on the output of a timesheet)
   d. The ecological impact of the operations are determined accordingly
   e. An updated environmental impact certificate is generated (as previously described), which is sent on to a downstream entity.
5. Point of sale (PoS) system
   a. At a point of sale system, goods are sold to an end user. The goods are associated with respective environmental impact certificates.
   b. Upon a transaction occurring, a new environmental impact certificate is transferred to a user account of the customer, optionally based on a user account card (associated with the system 200) being scanned at the point of sale system.
   c. Further details are shown in Figure 6.

In a continuation of the example described with reference to Figure 2, the impact of categorised inputs can be shown:
o The (or a portion of) the batch of bottled water manufactured by User B is hauled by User C (a hauler), as recorded on the electronic ledger 120-1 of User B and/or User C (where the electronic ledgers here are in the form of an accounting system and/or haulage track and trace system)
o User C collects the batch of bottled water and logs - as an inherent part of their electronic ledger 120-3 - the parameters associated with the haulage, including for example weight of product and distance to / from destinations (since User C may be picking up from multiple pickup points/or and delivering to multiple destinations, potentially via various interim destinations), the environmental impact value evaluator 130 determines an environmental impact value 150-3 associated with User C for the haulage of a batch of bottled water using:
   ▪ pre-determined data regarding environmental impact for haulage of a given mass of goods by User C (as determined by a lifecycle expert)
   ▪ The data logged by the electronic ledger 120-3 regarding the details of the haulage, including: distance to destinations; mass of hauled product; vehicle(s) used (in particular fuel consumption); and overheads, such as energy for refrigeration etc.
o In this way, User C determined an environmental impact value 150-3 associated with the haulage of the batch of bottled water which is incorporated into an updated environmental impact certificate, which includes the environmental impact incurred by preceding entities in the supply chain (including at least Users A and B).
∘ The hauled batch of water will continue to further users (e.g. retailers, consumers, etc.), and so the environmental impact value certificate 160-3 is transmitted onwards (via the associated database) to allow for onward receipt of environmental impact values by subsequent users within a the supply chain.

It will be appreciated that in the example of haulage, other particular considerations may apply - in particular, the hauler's customer (i.e. the entity to which the environmental impact should be transferred) may be either the upstream or downstream entity. Additionally, in some circumstances the hauler does not take legal possession of the goods - and so does not receive an environmental impact value certificate. In this case, the environmental impact associated with hauling (generally, the capital item of a vehicle and the overheads of running the vehicle and any supporting services, such as an office) is transferred directly to the customer (as an overhead associated with the hauled goods).

It will be appreciated that the concept of using "overheads" in assessing environmental impact allows the environmental impact of byproducts in manufacturing to be assessed, together with the final product (that is transferred to the subsequent entity) itself. Similarly, the environmental impact of "interim products", which are produced and are used in manufacturing but never go directly to a consumer, can be assessed. As an example of an "interim product", in the manufacture of soap, lye is produced and used to manufacture several batches of soap. The ecological impact of lye product, use, and disposal can be distributed across various batches of soap (or even individual soap products) by treating it as an "overhead".

### Alternatives and Extensions

It will be appreciated that the system and method have been described by way of example, and many alternative implementations will occur to the skilled person. In particular, any described method steps may be performed out of the described order.

Although the use of a separate environmental impact value evaluator 130 for each entity in the supply chain has been described, it will be appreciated that a single central environmental impact value evaluator could instead be used, where such an environmental impact value evaluator may be configured to communicate with the electronic ledgers of each of the entities. The environmental impact value evaluator may be hosted at an external server, or distributed across a plurality of servers in a "cloud computing" arrangement. It will also be appreciated that certain elements of the environmental impact value evaluator may be provided locally to the entity, while certain other aspects may be provided away from the entity.

In an alternative, there may be no distinct "end user", as described in particular with reference to Figure 3. Instead, the "end user" is viewed as simply another entity that performs operations on the product and passes ecological impact along to further entities, in particular entities involved in disposal and recycling of the product.

In an alternative, rather than the data extractor 132 extracting new entries into the electronic ledger 120, the data extractor is configured to search through the ledger to find entries of relevance. For example, the data extractor may use purchase orders to refer to internal product classifications.

In an alternative, the external databases 300 are instead part of the environmental impact value evaluator 130 itself, rather than being external to the evaluator. Such internal databases may be regularly synchronised with a master copy at an external server to ensure that they remain up-to-date.

Optionally, the environmental impact value evaluator 130 comprises a trained machine learning model which is configured to classify products. The model may be implemented as a convolutional neural network. The method 500 of processing an environmental impact may include additional steps of gathering data/statistics for use in this model.

Optionally, providing data related to environmental impacts of one or more operations comprises obtaining data relating to operations on products. The entity may, for example, measure its own electricity/resource consumption in performing operations on the product, and update the environmental impact database accordingly.

Optionally, each environmental impact certificate is associated with an invoice issued via an electronic ledger, for example via an invoice number provided on the environmental impact certificate. In this way, environmental impact certificates can be associated with individual transactions.

In an alternative, the environmental impact value database is made up of data from a plurality of systems 100, preferably wherein such data is suitably anonymised.

In an alternative (simpler) implementation of the user environmental impact account card 174, the account card is a "stored-value" card, in which a value corresponding to the balance of a consumer's environmental impact account is stored (as binary encoded data) on the account card itself. A consumer may read the balance of the account by accessing the data on the card, for example via an interaction with the magnetic strip.

In an alternative, the system for accessing the user environmental impact account card 174 is not part of the point of sale system 170, and is instead a separate system. The separate system may interface with the electronic ledger 120-4 to allow transactions related to a particular product to be detected and an environmental impact value certificate 160-4 to be associated with a user account accordingly.

In an alternative, the consumer's environmental impact account may be integrated (to at least some extent) with an electronic ledger associated with the consumer, generally the consumer's bank account or credit card account. In this alternative, the environmental impact account may extract transaction records from the electronic ledger and request/be provided with environmental impact certificates accordingly - as such, the use of a user account card which interfaces with the point of sale system 170 is generally not necessary.

Optionally, the user environmental impact account 176 receives further inputs other than purchases (recorded by interactions between a point of sale system 170 and an account card 174). In particular, the environmental impact account may take account of the environmental impact of "overheads" or regular spending associated with the consumer, such as gas or electricity bills, and rent or mortgage payments (corresponding to the environmental impact associated with that consumer's accommodation).

In one alternative, the certificate database 320 is a distributed ledger, where each environmental impact certificate 160 forms part of a blockchain. Each environmental impact certificate 160 is passed between entities in the supply chain via a peer-to-peer network and is updated by each user, as is well known for blockchain applications. This implementation may render the environmental impact certificates 160, and thereby the system 200 as a whole, substantially tamper-resistant.

In a further alternative, the updated certificate 160 is simply transmitted to the environmental impact evaluator of the downstream entity, removing the need for a certificate database 320.

In an alternative, the determination module 134 determines the environmental impact of the operations of the entity on the product by associating the environmental impact data and the identity and quantity of the product provided by the environmental impact certificate (i.e. there is no reference to the parsed log entries).

## Claims

1. A system (200) for updating a certificate database, the system comprising:
an environmental impact database (310) for storing data related to environmental impacts of one or more operations associated with one or more products, the environmental impact database being mutually accessible by entities in the supply chain;
a certificate database (320), the certificate database being mutually accessible to entities in the supply chain;
an electronic ledger (120-2) associated with an entity in a supply chain, the entity being arranged to receive a product from an upstream entity (210-1) in the supply chain and the electronic ledger being arranged to log an identity of the received product by receiving an input corresponding to a scan of a physical identifier on or associated with the product; wherein the electronic ledger (120-2) comprises an application program interface (API);
an environmental impact value evaluator (130) associated with the entity, comprising:
a data extractor (132) arranged to identify an identity of the product from the electronic ledger (120-2) by:
using an API to extract log entries via the API of the ledger;
copying the log entries into a temporary cache; and
parsing the log entries, thereby to detect an interaction between the entity and the product;
a module for receiving, from the upstream entity, unique identifiers allowing unique access to an environmental impact certificate;
a module (136) for accessing the environmental impact certificate (160-1) associated with the identified product from the certificate database (320), wherein the environmental impact certificate (160-1) is made accessible in dependence on the detection of the interaction between the entity and the product;
a module (134) for determining an environmental impact associated with one or more operations on the product by the entity by associating the data related to environmental impacts and the identified product;
a module (138) for generating an updated environmental impact certificate (160-2) including the determined environmental impact associated with the one or more operations of the entity on the product; and
a module for storing the updated environmental impact certificate (160-2) on the certificate database (320).

2. A system (200) according to the preceding claim, wherein the electronic ledger (120-2) is further arranged to log an identity of the received product by at least one of
receiving a transaction record from the upstream entity (210-1); and
creating a transaction record.

3. A system (200) according to any preceding claim, wherein the data related to environmental impacts of one or more operations associated with one or more products comprises at least one of: a Lifecycle Impact Database; a calculation of environmental impact; and the determined environmental impact associated with one or more operations on the product by the entity (210-2).

4. A system (200) according to any preceding claim, further comprising a module for collecting data related to an environmental impact associated with operations on products; wherein said collecting optionally comprises one or more of: monitoring power consumption by the entity; and monitoring resource consumption by the entity.

5. A system (200) according to any preceding claim, further comprising a module for logging at least one of: the determined environmental impact associated with one or more operations on the product by the entity, and the updated environmental impact certificate (160-2), against a user profile for the entity.

6. A system (200) according to Claim 5, wherein at least one of: the determined environmental impact associated with one or more operations on the product by the entity, and the updated environmental impact certificate (160-2), are associated with the user profile by means of an interaction between a user account card (174) and a point of sale system (170) capable of performing said association.

7. A system (200) according to Claim 6, further comprising at least one of: the point of sale system (170); and the user account card (174).

8. A system (200) according to any of Claims 5 to 7, further comprising a module for deleting personal data associated with the user profile when the user associated with that user profile downloads the data associated with their user profile.

9. A system (200) according to any of Claims 5 to 8, further comprising a module for categorizing the product, optionally based on the identity of the product, thereby to identify the one or more operations on the product by the entity.

10. A system (200) according to any preceding claim, wherein the module (134) for determining an environmental impact associated with one or more operations on the product by the entity operates by associating the data related to environmental impacts, the identified product and the identified one or more operations.

11. A method (500) of updating a certificate database, the method comprising:
providing (510), at an environmental impact database (310), data related to environmental impacts of one or more operations associated with one or more products, the environmental impact database being mutually accessible by entities in the supply chain;
providing a certificate database (320) being mutually accessible to entities in the supply chain, and an environmental impact value evaluator being associated with an entity in a supply chain;
at an entity (210-2) in a supply chain, receiving (520) a product from an upstream entity (210-1) in the supply chain by receiving an input corresponding to a scan of a physical identifier on or associated with the product; wherein the electronic ledger (120-2) comprises an application program interface (API);
logging (530) an identity of the product by means of an electronic ledger (120-2) associated with the entity;
identifying (540), from the electronic ledger, by means of a data extractor (132) an identity of the product by:
using an API to extract log entries via the API of the ledger;
copying the log entries into a temporary cache; and
parsing the log entries, thereby to detect an interaction between the entity and the product;
receiving, from the upstream entity, unique identifiers allowing unique access to an environmental impact certificate;
accessing (550) the environmental impact certificate (160-1) associated with the identified product from the certificate database (320), wherein the environmental impact certificate is made accessible in dependence on the detection of the interaction between the entity and the product;
determining (560) an environmental impact associated with one or more operations on the product by the entity by associating the data related to environmental impacts and the identified product;
generating (570) an updated environmental impact certificate (160-2) including the determined environmental impact associated with the one or more operations of the entity on the product; and
storing the updated environmental impact certificate (160-2) on the certificate database (320).

12. A computer program product comprising software code adapted to carry out the method (500) of Claim 11.

## Patentansprüche

1. System (200) zum Aktualisieren einer Zertifikatsdatenbank, wobei das System Folgendes umfasst:
eine Umweltauswirkungsdatenbank (310) zum Speichern von Daten, die sich auf die Umweltauswirkungen von einem oder mehreren Vorgängen beziehen, die einem oder mehreren Produkten zugeordnet sind, wobei die Umweltauswirkungsdatenbank von Entitäten in der Lieferkette gegenseitig zugänglich ist;
eine Zertifikatsdatenbank (320), wobei die Zertifikatsdatenbank für Entitäten in der Lieferkette gegenseitig zugänglich ist;
ein elektronisches Hauptbuch (120-2), das einer Entität in einer Lieferkette zugeordnet ist, wobei die Entität dafür ausgelegt ist, ein Produkt von einer vorgelagerten Entität (210-1) in der Lieferkette zu empfangen, und das elektronische Hauptbuch dafür ausgelegt ist, eine Identität des empfangenen Produkts zu protokollieren, indem es eine Eingabe empfängt, die einer Abtastung eines physischen Identifizierers auf oder in Verbindung mit dem Produkt entspricht; wobei das elektronische Hauptbuch (120-2) eine Anwendungsprogrammschnittstelle (Application Program Interface, API) umfasst;
einen Umweltauswirkungswertbewerter (130), der der Entität zugeordnet ist und Folgendes umfasst:
einen Datenextraktor (132), der dafür ausgelegt ist, eine Identität des Produkts aus dem elektronischen Hauptbuch (120-2) durch Folgendes zu identifizieren:
Verwenden einer API, um Protokolleinträge über die API des Hauptbuchs zu extrahieren;
Kopieren der Protokolleinträge in einen temporären Zwischenspeicher; und
Parsen der Protokolleinträge, um dadurch eine Interaktion zwischen der Entität und dem Produkt zu erfassen;
ein Modul zum Empfangen eindeutiger Kennungen von der vorgelagerten Entität, die einen eindeutigen Zugriff auf ein Umweltauswirkungszertifikat ermöglichen;
ein Modul (136) für den Zugriff auf das Umweltauswirkungszertifikat (160-1), das dem identifizierten Produkt zugeordnet ist, aus der Zertifikatsdatenbank (320), wobei das Umweltauswirkungszertifikat (160-1) in Abhängigkeit von der Erfassung der Interaktion zwischen der Entität und dem Produkt zugänglich gemacht wird;
ein Modul (134) zum Bestimmen einer Umweltauswirkung, die einem oder mehreren Vorgängen an dem Produkt durch die Entität zugeordnet ist, indem die Daten, die sich auf Umweltauswirkungen und das identifizierte Produkt beziehen, zugeordnet werden;
ein Modul (138) zum Erzeugen eines aktualisierten Umweltauswirkungszertifikats (160-2), das die bestimmte Umweltauswirkung enthält, die dem einen oder den mehreren Vorgängen der Entität an dem Produkt zugeordnet ist; und
ein Modul zum Speichern des aktualisierten Umweltauswirkungszertifikats (160-2) in der Zertifikatsdatenbank (320).

2. System (200) nach dem vorhergehenden Anspruch, wobei das elektronische Hauptbuch (120-2) ferner dafür ausgelegt ist, eine Identität des empfangenen Produkts zu protokollieren, indem es mindestens einen Transaktionsdatensatz von der vorgelagerten Entität (210-1) empfängt und einen Transaktionsdatensatz erstellt.

3. System (200) nach einem der vorhergehenden Ansprüche, wobei die Daten, die sich auf die Umweltauswirkungen eines oder mehrerer Vorgänge beziehen, die einem oder mehreren Produkten zugeordnet sind, mindestens eines der Folgenden umfassen: eine Datenbank für Lebenszyklusauswirkungen; eine Berechnung der Umweltauswirkungen; und die ermittelten Umweltauswirkungen, die einem oder mehreren Vorgängen an dem Produkt zugeordnet sind, durch die Entität (210-2).

4. System (200) nach einem der vorhergehenden Ansprüche, das ferner ein Modul zum Sammeln von Daten umfasst, die sich auf eine Umweltauswirkung beziehen, die Vorgängen an Produkten zugeordnet ist; wobei das genannte Sammeln optional eines oder mehrere der Folgenden umfasst:
Überwachen des Stromverbrauchs durch die Entität; und
Überwachen des Ressourcenverbrauchs durch die Entität.

5. System (200) nach einem der vorhergehenden Ansprüche, das ferner ein Modul zum Protokollieren von mindestens einem der Folgenden umfasst: der bestimmten Umweltauswirkungen, die einem oder mehreren Vorgängen an dem Produkt durch die Entität zugeordnet sind, und des aktualisierten Umweltauswirkungszertifikats (160-2), mit einem Benutzerprofil für die Entität.

6. System (200) nach Anspruch 5, wobei mindestens eines von den bestimmten Umweltauswirkungen, die einem oder mehreren Vorgängen an dem Produkt durch die Entität zugeordnet sind, und dem aktualisierten Umweltauswirkungszertifikat (160-2) dem Benutzerprofil mittels einer Interaktion zwischen einer Benutzerkontokarte (174) und einem Kassensystem (170), das in der Lage ist, die genannte Zuordnung durchzuführen, zugeordnet werden.

7. System (200) nach Anspruch 6, das ferner mindestens eines der Folgenden umfasst: das Kassensystem (170); und die Benutzerkontokarte (174).

8. System (200) nach einem der Ansprüche 5 bis 7, das ferner ein Modul zum Löschen von persönlichen Daten umfasst, die dem Benutzerprofil zugeordnet sind, wenn der diesem Benutzerprofil zugeordnete Benutzer die seinem Benutzerprofil zugeordneten Daten herunterlädt.

9. System (200) nach einem der Ansprüche 5 bis 8, das ferner ein Modul zur Kategorisierung des Produkts umfasst, optional basierend auf der Identität des Produkts, um dadurch die eine oder mehrere Operationen an dem Produkt durch die Entität zu identifizieren.

10. System (200) nach einem der vorhergehenden Ansprüche, wobei das Modul (134) zum Bestimmen einer Umweltauswirkung, die einem oder mehreren Vorgängen an dem Produkt durch die Entität zugeordnet ist, durch Zuordnen der Daten, die sich auf Umweltauswirkungen beziehen, zu dem identifizierten Produkt und dem identifizierten einen oder mehreren Vorgängen arbeitet.

11. Verfahren (500) zum Aktualisieren einer Zertifikatsdatenbank, wobei das Verfahren Folgendes umfasst:
Bereitstellen (510), an einer Umweltauswirkungsdatenbank (310), von Daten, die sich auf die Umweltauswirkungen eines oder mehrerer Vorgänge beziehen, die einem oder mehreren Produkten zugeordnet sind, wobei die Umweltauswirkungsdatenbank für die Entitäten in der Lieferkette gegenseitig zugänglich ist;
Bereitstellen einer Zertifikatsdatenbank (320), auf die Entitäten in der Lieferkette gegenseitig zugreifen können, und eines Umweltauswirkungswertbewerters, der einer Entität in einer Lieferkette zugeordnet ist;
an einer Entität (210-2) in einer Lieferkette, Empfangen (520) eines Produkts von einer stromaufwärts gelegenen Entität (210-1) in der Lieferkette durch Empfangen einer Eingabe, die einer Abtastung eines physischen Identifizierers auf oder in Verbindung mit dem Produkt entspricht; wobei das elektronische Hauptbuch (120-2) eine Anwendungsprogrammschnittstelle (API) umfasst;
Protokollieren (530) einer Identität des Produkts mittels eines elektronischen Hauptbuchs (120-2), das der Entität zugeordnet ist;
Identifizieren (540), aus dem elektronischen Hauptbuch, einer Identität des Produkts mit Hilfe eines Datenextraktors (132) durch:
Verwenden einer API, um Protokolleinträge über die API des Hauptbuchs zu extrahieren;
Kopieren der Protokolleinträge in einen temporären Zwischenspeicher; und
Parsen der Protokolleinträge, um dadurch eine Interaktion zwischen der Entität und dem Produkt zu erfassen;
Empfangen eindeutiger Kennungen von der vorgelagerten Entität, die einen eindeutigen Zugriff auf ein Umweltauswirkungszertifikat ermöglichen;
Zugreifen (550) auf das Umweltauswirkungszertifikat (160-1), das dem identifizierten Produkt zugeordnet ist, aus der Zertifikatsdatenbank (320), wobei das Umweltauswirkungszertifikat in Abhängigkeit von der Erfassung der Interaktion zwischen der Entität und dem Produkt zugänglich gemacht wird;
Bestimmen (560) einer Umweltauswirkung, die einem oder mehreren Vorgängen an dem Produkt durch die Entität zugeordnet ist, indem die Daten, die sich auf Umweltauswirkungen und das identifizierte Produkt beziehen, zugeordnet werden;
Erzeugen (570) eines aktualisierten Umweltauswirkungszertifikats (160-2), das die bestimmte Umweltauswirkung enthält, die dem einen oder den mehreren Vorgängen der Entität an dem Produkt zugeordnet ist; und
Speichern des aktualisierten Umweltauswirkungszertifikats (160-2) in der Zertifikatsdatenbank (320).

12. Computerprogrammprodukt, das Softwarecode umfasst, der dafür ausgelegt ist, das Verfahren (500) nach Anspruch 11 auszuführen.

## Revendications

1. Système (200) de mise à jour d'une base de données de certificats, le système comprenant :
une base de données d'impacts environnementaux (310) pour stocker des données relatives à des impacts environnementaux d'une ou plusieurs opérations associées à un ou plusieurs produits, la base de données d'impacts environnementaux étant mutuellement accessible par des entités dans la chaîne d'approvisionnement ;
une base de données de certificats (320), la base de données de certificats étant mutuellement accessible à des entités de la chaîne d'approvisionnement ;
un registre électronique (120-2) associé à une entité dans une chaîne d'approvisionnement, l'entité étant destinée à recevoir un produit à partir d'une entité en amont (210-1) dans la chaîne d'approvisionnement et le registre électronique étant conçu pour consigner une identité du produit reçu en recevant une entrée correspondant à un balayage d'un identifiant physique sur le produit ou associé à celui-ci ; dans lequel le registre électronique (120-2) comprend une interface de programme d'application (API) ;
un évaluateur de valeur d'impact environnemental (130) associé à l'entité, comprenant :
un extracteur de données (132) conçu pour identifier une identité du produit à partir du registre électronique (120-2) en :
utilisant une API pour extraire des entrées consignées par l'intermédiaire de l'API du registre ;
copiant les entrées consignées dans un cache temporaire ; et
analysant syntaxiquement les entrées consignées, afin de détecter une interaction entre l'entité et le produit ;
un module de réception, à partir de l'entité en amont, d'identifiants uniques permettant un accès unique à un certificat d'impact environnemental ;
un module (136) d'accès au certificat d'impact environnemental (160-1) associé au produit identifié à partir de la base de données de certificats (320), dans lequel le certificat d'impact environnemental (160-1) est rendu accessible en fonction de la détection de l'interaction entre l'entité et le produit ;
un module (134) de détermination d'un impact environnemental associé à une ou plusieurs opérations sur le produit par l'entité en associant les données relatives à des impacts environnementaux et le produit identifié ;
un module (138) de génération d'un certificat d'impact environnemental mis à jour (160-2) comportant l'impact environnemental déterminé associé aux une ou plusieurs opérations de l'entité sur le produit ; et
un module de stockage du certificat d'impact environnemental mis à jour (160-2) dans la base de données de certificats (320).

2. Système (200) selon la revendication précédente, dans lequel le registre électronique (120-2) est conçu en outre pour consigner une identité du produit reçu par au moins la réception d'un enregistrement de transaction à partir de l'entité en amont (210-1) ; et
la création d'un enregistrement de transaction.

3. Système (200) selon n'importe quelle revendication précédente, dans lequel les données relatives à des impacts environnementaux d'une ou plusieurs opérations associées à un ou plusieurs produits comprennent au moins : une base de données d'impacts sur le cycle de vie ; un calcul d'impact environnemental ; et l'impact environnemental déterminé associé à une ou plusieurs opérations sur le produit par l'entité (210-2).

4. Système (200) selon n'importe quelle revendication précédente, comprenant en outre un module de collecte de données relatives à un impact environnemental associé à des opérations sur des produits ; dans lequel ladite collecte comprend éventuellement : une surveillance de la consommation d'énergie par l'entité ; et/ou une surveillance de la consommation de ressources par l'entité.

5. Système (200) selon n'importe quelle revendication précédente, comprenant en outre un module de consignation au moins : de l'impact environnemental déterminé associé à une ou plusieurs opérations sur le produit par l'entité, et du certificat d'impact environnemental mis à jour (160-2), au regard d'un profil d'utilisateur de l'entité.

6. Système (200) selon la revendication 5, dans lequel au moins un : de l'impact environnemental déterminé associé à une ou plusieurs opérations sur le produit par l'entité, et du certificat d'impact environnemental mis à jour (160-2), sont associés au profil d'utilisateur au moyen d'une interaction entre une fiche de compte d'utilisateur (174) et un système de point de vente (170) capable de réaliser ladite association.

7. Système (200) selon la revendication 6, comprenant en outre au moins un : du système de point de vente (170) ; et de la carte de compte d'utilisateur (174).

8. Système (200) selon l'une quelconque des revendications 5 à 7, comprenant en outre un module de suppression de données à caractère personnel associées au profil d'utilisateur lorsque l'utilisateur associé à ce profil d'utilisateur télécharge les données associées à son profil d'utilisateur.

9. Système (200) selon l'une quelconque des revendications 5 à 8, comprenant en outre un module de catégorisation du produit, éventuellement basé sur l'identité du produit, pour ainsi identifier une ou plusieurs opérations sur le produit par l'entité.

10. Système (200) selon n'importe quelle revendication précédente, dans lequel le module (134) de détermination d'un impact environnemental associé à une ou plusieurs opérations sur le produit par l'entité opère en associant les données relatives à des impacts environnementaux, le produit identifié et les une ou plusieurs opérations identifiées.

11. Procédé (500) de mise à jour d'une base de données de certificats, le procédé comprenant :
la fourniture (510), au niveau d'une base de données d'impacts environnementaux (310), de données relatives à des impacts environnementaux d'une ou plusieurs opérations associées à un ou plusieurs produits, la base de données d'impacts environnementaux étant mutuellement accessible par des entités dans la chaîne d'approvisionnement ;
la fourniture d'une base de données de certificats (320) mutuellement accessible à des entités dans la chaîne d'approvisionnement et un évaluateur de valeur d'impact environnemental associé à une entité dans une chaîne d'approvisionnement ;
au niveau d'une entité (210-2) dans une chaîne d'approvisionnement, la réception (520) d'un produit à partir d'une entité en amont (210-1) dans la chaîne d'approvisionnement en recevant une entrée correspondant à un balayage d'un identifiant physique sur le produit ou associé à celui-ci ; dans lequel le registre électronique (120-2) comprend une interface de programme d'application (API) ;
la consignation (530) d'une identité du produit au moyen d'un registre électronique (120-2) associé à l'entité ;
l'identification (540), à partir du registre électronique, au moyen d'un extracteur de données (132) d'une identité du produit en :
utilisant une API pour extraire des entrées consignées par l'intermédiaire de l'API du registre ;
copiant les entrées consignées dans un cache temporaire ; et
analysant syntaxiquement les entrées consignées, pour ainsi détecter une interaction entre l'entité et le produit ;
la réception, à partir de l'entité en amont, d'identifiants uniques permettant un accès unique à un certificat d'impact environnemental ;
l'accès (550) au certificat d'impact environnemental (160-1) associé au produit identifié à partir de la base de données de certificats (320), dans lequel le certificat d'impact environnemental est rendu accessible en fonction de la détection de l'interaction entre l'entité et le produit ;
la détermination (560) d'un impact environnemental associé à une ou plusieurs opérations sur le produit par l'entité en associant les données relatives aux impacts environnementaux et le produit identifié ;
la génération (570) d'un certificat d'impact environnemental mis à jour (160-2) comportant l'impact environnemental déterminé associé aux une ou plusieurs opérations de l'entité sur le produit ; et
le stockage du certificat d'impact environnemental mis à jour (160-2) dans la base de données de certificats (320) .

12. Produit de programme d'ordinateur comprenant un code logiciel conçu pour réaliser le procédé (500) selon la revendication 11.
